# EUROPÄISCHE PATENTANMELDUNG

(11) **EP 1 264 534 A2**
(43) Veröffentlichungstag der Anmeldung: **11.12.2002**
(21) Anmeldenummer: 02100447.8
(22) Anmeldetag: 06.05.2002
(51) Int. Cl.: A01F 29/02

(54) **Häckselschlägel für einen Strohhäcksler**

(30) Priorität: 09.05.2001 US 851827
(71) Anmelder: DEERE & COMPANY, Moline, Illinois 61265-8098 (US)
(72) Erfinder: Wilson, John Edward, Coal Valley, IL 61240 (US)
(74) Vertreter: Holst, Sönke, Dr.

(57) **Zusammenfassung**

Die Erfindung bezieht sich auf einen Häckselschlägel (60) für einen Strohhäcksler (40), mit einem ersten Ende (62), in dem wenigstens eine Bohrung (64) zur schwenkbaren Befestigung an einem Rotor (44) vorhanden ist, einem zweiten Ende (72) und einem mittleren Abschnitt (80), der sich zwischen dem ersten Ende (62) und dem zweiten Ende (72) erstreckt.

Es wird vorgeschlagen, dass das zweite Ende einen sich nach innen erstreckenden, radialen Schlitz (74) aufweist.

## Beschreibung

Die Erfindung betrifft einen Häckselschlägel für einen Strohhäcksler, mit einem ersten Ende, in dem wenigstens eine Bohrung zur schwenkbaren Befestigung an einem Rotor vorhanden ist, einem zweiten Ende und einem mittleren Abschnitt, der sich zwischen dem ersten Ende und dem zweiten Ende erstreckt.

Mähdrescher sind große landwirtschaftliche Maschinen, die zum Ernten, Dreschen, Trennen und Reinigen landwirtschaftlichen Ernteguts verwendet werden. Mähdrescher sind mit einem Korntank ausgestattet, um sauberes Korn zeitweise zu speichern, bevor es durch einen Entladeschneckenförderer auf einen Anhänger oder Lastwagen entladen wird. Diese Maschinen sind gewöhnlich selbstfahrend und können mit zusätzlichen Gutbearbeitungszusammenbauten ausgestattet werden, wie Strohhäckslern und Kaffstreuern.

Strohhäcksler erhalten Erntegutreste vom Trennsystem des Mähdreschers. Der Strohhäcksler vermindert die Größe der Komponenten der Erntegutreste, bevor sie auf das Feld zurück geleitet werden. Typische Strohhäcksler sind mit einem einen Rotor enthaltenden Gehäuse ausgestattet. Stationäre Messer ragen vom Gehäuse nach innen und wirken mit pendelnd aufgehängten Häckselschlägeln zusammen, um das Erntegut zu häckseln. Manche Häckselschlägel sind mit quer verlaufenden Paddeln ausgestattet, s. US 5 232 405 und US 5 482 508.

Die der Erfindung zugrunde liegende Aufgabe wird darin gesehen, verbesserte Häckselschlägel für einen Strohhäcksler bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäßen Häckselschlägel sind zur Verwendung in einem Strohhäcksler eines Mähdreschers geeignet. Der Strohhäcksler weist ein Gehäuse auf, das mit einer Vielzahl sich nach innen erstreckender Messer versehen ist. Er umfasst weiterhin einen Rotor, der antreibbar drehbar im Gehäuse gelagert und mit einer Vielzahl an Häckselschlägeln ausgestattet ist. Die Häckselschlägel sind durch sich radial erstreckende Befestigungsplatten schwenkbar am Rotor befestigbar. Jeder der Häckselschlägel ist mit einem ersten Ende ausgestattet, das ein Befestigungsende bildet und schwenkbar mit einer der radialen Befestigungsplatten koppelbar ist. Das gegenüberliegende, zweite Ende des Häckselschlägels bildet das gutbearbeitende Ende des Häckselschlägels. Zwischen dem ersten und dem zweiten Ende erstreckt sich ein mittlerer Abschnitt des Häckselschlägels. Die Erfindung schlägt vor, dass im zweiten Ende ein sich nach innen erstreckender, radialer Schlitz vorhanden ist. Dadurch entsteht ein Häckselschlägel mit zwei dem Schlitz gegenüberliegenden, relativ zueinander festen Elementen, die das Gut bearbeiten. Der Schlitz ermöglicht, das Gut gleichzeitig beidseitig des stationären Messers zu zerteilen, wenn der Schlitz das Messer überstreicht.

Auf diese Weise erreicht man eine Verbesserung des Häckselergebnisses. Die zwei beidseits des Schlitzes liegenden Teile des Messers bilden einen Häckselschlägel aus zwei aneinander befestigten Teilen, zwischen denen beim Häckselbetrieb das Messer liegt. Es ist gewährleistet, dass die beiden Teile jeweils gleichzeitig das Messer überstreichen, was ein synchrones Zerschneiden des Häckselguts auf beiden Seiten des Messers bewirkt.

Der Häckselschlägel ist vorzugsweise an seinem zweiten Ende gegenüber dem ersten Ende vergrößert, so dass ersteres beidseits des Schlitzes jeweils ein Art Hammer bildet. Dadurch, dass eine größere Masse in den Hämmern am zweiten, das Gut bearbeitenden Ende konzentriert ist, steht eine größere opferbare Masse zur Abnutzung bereit. Die Vergrößerung des zweiten Endes findet zweckmäßigerweise in Umfangsrichtung, d. h. in der Drehrichtung des Rotors statt, um den Luftwiderstand des Häckselschlägels nicht unnötig zu vergrößern. Dabei ist der mittlere Abschnitt des Häckselschlägels in der Regel in Umfangsrichtung dünner als das zweite Ende. Die außen verdickte Form des Häckselschlägels vergrößert die Übertragung von Stoßenergie zur Zerkleinerung der Erntegutreste, während seine Lebensdauer verlängert ist. Außerdem vergrößert die Form der Häckselschlägel die Geschwindigkeit der den Strohhäcksler durchströmenden Luft, was das Verteilen der Gutreste erleichtert.

Vorzugsweise sind die Vorder- und Rückseiten der Häckselschlägel identisch, so dass die Häckselschlägel umdrehbar sind. Ist eine Seite abgenutzt, wird einfach der Häckselschlägel umgedreht, um die zwischen Vorder- und Rückseite unterschiedliche Abnutzung auszugleichen.

Am ersten Ende kann ein sich nach außen erstreckender, radialer Schlitz angebracht sein. Dieser Schlitz definiert zwei sich quer erstreckende Befestigungsbohrungen oder -öffnungen. Die sich radial erstreckende Befestigungsplatte wird in dem sich radialen, sich nach außen erstreckenden Schlitz aufgenommen. Durch die Befestigungsbohrungen werden Befestigungsmittel (zu. B. mit Muttern gesicherte Schrauben) eingeführt, die den Häckselschlägel an der Befestigungsplatte haltern.

Das erste und das zweite Ende sind durch den mittleren Abschnitt verbunden. Dieser kann mit einem Verstärkungswulst versehen sein, welcher vorzugsweise einen Teil des sich radial nach innen erstreckenden Schlitzes und des sich radial nach außen erstreckenden Schlitzes definiert.

Die Häckselschlägel können ein einteiliger Körper sein, der vorzugsweise durch ein Gussverfahren hergestellt wird.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers;
- Fig. 2: eine perspektivische Ansicht des Rotors des Strohhäckslers; und
- Fig. 3: eine perspektivische Ansicht eines erfindungsgemäßen Häckselmessers.

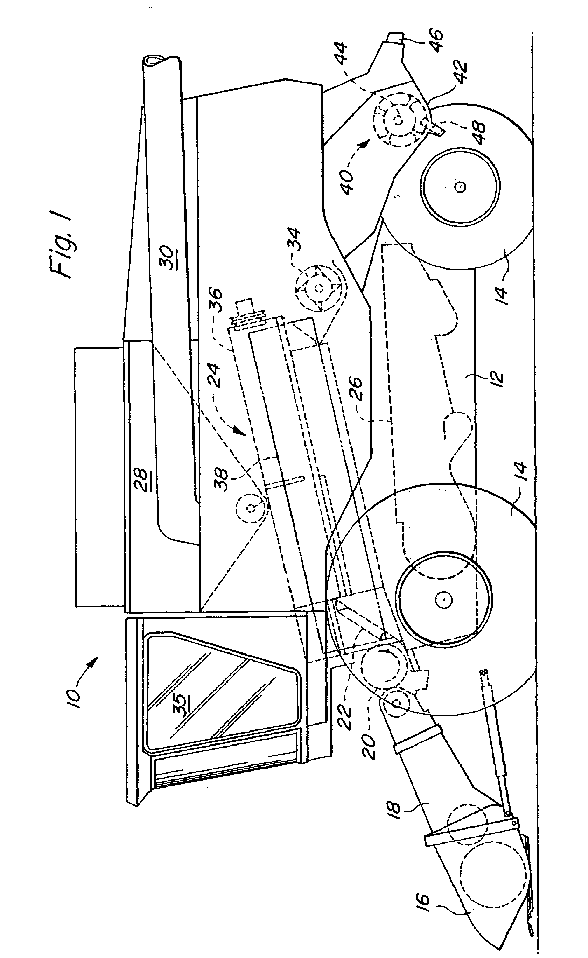

Die Figur 1 zeigt einen landwirtschaftlichen Mähdrescher 10 mit einem Chassis 12 und sich von diesem nach unten erstreckenden Bodenlaufrädern 14. Obwohl der Mähdrescher 10 mit Rädern 14 dargestellt ist, könnte er auch mit zwei oder vier Raupenketten ausgestattet sein. Eine Erntegutbergungsvorrichtung 16 wird verwendet, Erntegut zu ernten und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Im Folgenden beziehen sich alle Richtungsangaben (wie vorn, hinten, quer) auf die Vorwärtsfahrtrichtung des Mähdreschers 10.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 auf einen Anhänger oder Lastwagen entladen werden.

Gedroschenes, vom Korn befreites Stroh wird aus der Axialtrennvorrichtung 24 durch einen Auslass 32 zu einer Abgabetrommel 34 herausgeführt. Die Abgabetrommel 34 führt wiederum das vom Korn befreite Material direkt einem Strohhäcksler zu. Der Betrieb des Mähdreschers 10 wird von einer Fahrerkabine 35 aus gesteuert.

Die Axialtrennvorrichtung 24 umfasst ein zylindrisches Rotorgehäuse 36 und einen im Rotorgehäuse 36 angeordneten Rotor 38. Die vorderen Teile des Rotors 38 und des Rotorgehäuses 36 definieren den Beschickungsabschnitt der Axialtrennvorrichtung 24. In Längsrichtung des Rotors 38 stromabwärts des Beschickungsabschnitts befindet sich ein Dreschabschnitt, ein Trennabschnitt und ein Auslassabschnitt. Der Rotor 38 ist im Beschickungsabschnitt mit einer konischen Rotortrommel mit spiralwendelförmigen Beschickungselementen zum Erfassen von Erntegut ausgestattet, das er von der Leittrommel 20 und dem Einlassübergangsbereich 22 empfängt. Unmittelbar stromabwärts des Beschickungsabschnitts ist der Dreschabschnitt der Axialtrennvorrichtung 24. Im Dreschabschnitt umfasst der Rotor 38 eine zylindrische Rotortrommel mit einer Anzahl an Dreschelementen, um das Erntegut zu dreschen, das vom Beschickungsabschnitt empfangen wird. Stromabwärts des Dreschabschnitts ist der Trennabschnitt, in dem das im Erntegut gefangene Korn freigesetzt wird und durch ein bodenseitiges Rost in das Reinigungssystem 26 fällt. Der Trennabschnitt geht in einen Auslassabschnitt über, in dem Erntegut, das kein Korn enthält, aus der Axialtrennvorrichtung 24 ausgeworfen wird.

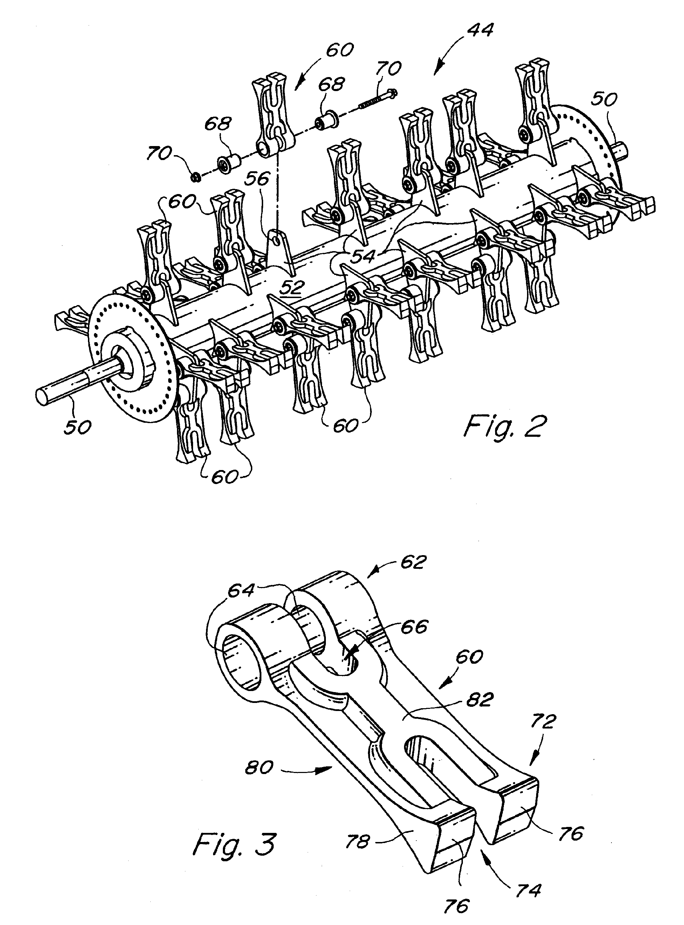

Der Strohhäcksler 40 umfasst ein Gehäuse 42 und einen darin befestigten Rotor 44. Das gehäckselte, von Korn befreite Material wird durch Führungskufen 46 auf dem Feld verstreut. Das Gehäuse 42 ist mit einer Vielzahl sich nach innen erstreckender, stationärer Messer 48 ausgestattet. Der Rotor 44, der am Besten in Figur 2 dargestellt ist, umfasst eine Antriebswelle 50, die mit einem zylindrischen Rohr 52 gekoppelt ist. Das zylindrische Rohr 52 ist mit einer Vielzahl sich radial zum Rotor 44 erstreckender Befestigungsplatten 54 versehen. Jede der Befestigungsplatten 54 ist mit einer Befestigungsöffnung 56 ausgestattet.

Eine Vielzahl an Häckselschlägeln 60 ist schwenkbar an den Befestigungsplatten 54 befestigt. Jeder der Häckselschlägel 60 ist mit einem ersten Ende 62 ausgestattet, an dem zwei Befestigungsbohrungen 64 vorgesehen sind, die durch einen sich nach außen erstreckenden, zum Rotor 44 radialen Schlitz 66 getrennt sind, der der jeweiligen Befestigungsplatte 54 entspricht. Jeder Häckselschlägel 60 ist an der Befestigungsplatte durch zwei Lagerungen 68 schwenkbar befestigt, die durch eine Befestigungsschraube und -mutter 70 an die Befestigungsplatte 54 gekoppelt sind. Das erste Ende ist das Befestigungsende jedes Häckselschlägels 60.

Jeder Häckselschlägel 60 ist mit einem zweiten Ende 72 ausgestattet, das einen sich nach innen erstreckenden, zum Rotor 44 radialen Schlitz 74 aufweist. Das zweite Ende 72 ist das das gutbearbeitende Ende des Häckselschlägels 60, das zuerst mit der Gutmatte zusammenwirkt. Das zweite Ende 72 ist in der Umfangsrichtung (Drehrichtung des Rotors 44) gegenüber den übrigen Teilen des Häckselschlägels 60 vergrößert, um zwei Hämmer 76 zu formen. Diese Hämmer 76 bewirken, dass mehr Masse am Gut bearbeitenden Ende des Häckselschlägels 60 angeordnet ist, um das Gut besser zu zerkleinern. Außerdem ist durch diese vergrößerten Hämmer 76 mehr opferbare Masse zum Abnutzen am Gut bearbeitenden Ende vorhanden. Die Häckselschlägel 60 drehen sich mit dem Rotor 44 und drehen an den stationären Messern 48 vorbei. Die stationären Messer 48 bewegen sich durch den Schlitz 74 und entlang der Seitenwände 78 der Häckselschlägel 60.

Ein mittlerer Abschnitt 80 erstreckt sich zwischen dem ersten Ende 62 und dem zweiten Ende 72. Der mittlere Abschnitt 80 hat einen Verstärkungswulst 82, der sich zwischen dem ersten Ende 62 und dem zweiten Ende 72 erstreckt und die Ränder der Schlitze 66 und 74 definiert.

Der Häckselschlägel 60 ist umdrehbar, so dass linke und rechte, unterschiedliche Häckselschlägel 60 nicht erforderlich sind. Außerdem kann der Häckselschlägel 60 umgedreht werden, wenn eine Seite des Häckselschlägels 60 abgenutzt ist, um den Verschleiß auf beide Seiten des Häckselschlägels 60 zu verteilen. In einer bevorzugten Ausführungsform ist der Häckselschlägel 60 gegossen.

## Patentansprüche

1. Häckselschlägel (60) für einen Strohhäcksler (40), mit einem ersten Ende (62), in dem wenigstens eine Bohrung (64) zur schwenkbaren Befestigung an einem Rotor (44) vorhanden ist, einem zweiten Ende (72) und einem mittleren Abschnitt (80), der sich zwischen dem ersten Ende (62) und dem zweiten Ende (72) erstreckt, **dadurch gekennzeichnet, dass** das zweite Ende einen sich nach innen erstreckenden, radialen Schlitz (74) aufweist.

2. Häckselschlägel (60) nach Anspruch 1, **dadurch gekennzeichnet, dass** das zweite Ende gegenüber dem ersten Ende vergrößert ist und beidseits des Schlitzes (74) je einen Hammer (76) bildet.

3. Häckselschlägel (60) nach Anspruch 2, **dadurch gekennzeichnet, dass** das zweite Ende (72) in Umfangsrichtung vergrößert ist.

4. Häckselschlägel (60) nach Anspruch 2 oder 3, **dadurch gekennzeichnet, dass** der mittlere Abschnitt (80) in Umfangsrichtung dünner als das zweite Ende (72) ist.

5. Häckselschlägel (60) nach einem der vorhergehenden Ansprüche, **dadurch gekennzeichnet, dass** er identische Vorder- und Rückseiten aufweist und umdrehbar ist.

6. Häckselschlägel (60) nach einem der vorhergehenden Ansprüche, **dadurch gekennzeichnet, dass** das erste Ende (62) mit zwei quer verlaufenden Bohrungen (64) versehen ist, die durch einen sich nach außen erstreckenden, radialen Schlitz (66) getrennt sind.

7. Häckselschlägel (60) nach einem der vorhergehenden Ansprüche, **dadurch gekennzeichnet, dass** der mittlere Abschnitt (80) mit einem Verstärkungswulst (82) versehen ist, der vorzugsweise auch einen Abschnitt des sich nach innen erstreckenden radialen Schlitzes (74) und einen Abschnitt des sich nach außen erstreckenden radialen Schlitzes (66) definiert.

8. Häckselschlägel (60) nach einem der vorhergehenden Ansprüche, **dadurch gekennzeichnet, dass** der mittlere Abschnitt (80) mit dem ersten Ende (62) und dem zweiten Ende (72) einen einteiligen Körper bildet.

9. Strohhäcksler (40) für einen landwirtschaftlichen Mähdrescher (10), mit einem Gehäuse (42), das mit einer Vielzahl sich nach innen erstreckender, stationärer Messer (48) versehen ist, einem im Gehäuse (42) angeordneten Rotor (44), der um seine Achse drehbar ist, und einer Mehrzahl an Häckselschlägeln (60), die ein erstes Ende (62) aufweisen, an dem sie schwenkbar an den Rotor (44) gekoppelt sind, **dadurch gekennzeichnet, dass** die Häckselschlägel (60) nach einem der vorhergehenden Ansprüche ausgeführt sind, wobei der sich nach innen erstreckende Schlitz (74) einem der sich nach innen erstreckenden Messer (48) zugeordnet ist.
